# FASCICULE DE BREVET EUROPEEN

(11) **EP 2 355 653 B1**
(45) Date de publication et mention de la délivrance du brevet: **31.05.2017**
(21) Numéro de dépôt: 09781379.4
(22) Date de dépôt: 31.07.2009
(51) Int. Cl.: A01K 11/00

(54) **DISPOSITIF DE PRÉLÈVEMENT D'UN ÉCHANTILLON DE TISSU D'UN ANIMAL**
GERÄT FÜR DIE ENTNAHME EINER GEWEBEPROBE AUS EINEM TIER
DEVICE FOR COLLECTING A TISSUE SAMPLE FROM AN ANIMAL

(30) Priorité: 10.12.2008 FR 0858453
(43) Date de publication de la demande: 17.08.2011
(73) Titulaire: Allflex Europe, 35500 Vitré (FR)
(72) Inventeur: DESTOUMIEUX, Jean-Jacques, F-81380 Lescure D'albigeois (FR); TEYCHENE, Bruno, F-81430 Mouzieys-teulet (FR)
(74) Mandataire: Vidon Brevets & Stratégie
(86) Numéro de dépôt international: PCT/EP2009/059981
(87) Numéro de publication internationale: WO 2010/066475

(56) Documents cités:
- WO-A-2004/010773
- WO-A-2008/003693
- US-A- 5 526 822
- US-B1- 6 659 338

## Description

### 1. Domaine de l'invention

Le domaine de l'invention est celui du contrôle et/ou de l'identification des animaux.

Plus précisément, l'invention concerne le prélèvement de tissu d'un animal, permettant notamment de conserver des cellules portant des caractéristiques biologiques ou biochimiques de l'animal, par exemple pour identifier ultérieurement l'animal ou détecter des maladies de l'animal.

L'invention permet notamment le prélèvement de tissu sur des bovins, des ovins, des porcins, des caprins, des volatiles, des poissons ou plus généralement sur toute espèce animale, pouvant être effectué avec ou sans pose simultanée d'une marque d'identification.

### 2. Art antérieur

Afin d'améliorer le suivi du cheptel et garantir l'origine des animaux destinés notamment à la consommation, par exemple en détectant des maladies, il est de plus en plus souvent procédé à un ou plusieurs prélèvements de tissu des animaux concernés.

Un tel prélèvement peut être effectué directement sur l'animal, à sa naissance par exemple, ou lors de la pose d'une marque d'identification de l'animal. D'autres prélèvements peuvent également être effectués tout au long de l'existence de l'animal, par exemple pour détecter des maladies ou certifier l'identité de l'animal, par comparaison des séquences ADN. Une fois collecté, l'échantillon de tissu de l'animal peut donc être stocké et/ou transmis à un laboratoire pour analyse.

Les techniques de prélèvement actuellement utilisées permettent de prélever un échantillon de tissu de l'animal lors de la pose d'une marque d'identification, qui peut être visuelle ou électronique.

Malheureusement, ces techniques de prélèvement demandent une adaptation des marques existantes, tant au niveau de leur structure que des matériaux utilisés. Ces contraintes peuvent engendrer des problèmes de comportement des marques, comme une mauvaise tenue de la marque ou un vieillissement prématuré.

Des techniques de prélèvement de tissu mises en oeuvre indépendamment de la pose d'une marque d'identification sont également connues. Le brevet européen EP 1 014 861 au nom de Biopsytec Gmbh ainsi que le document WO-A-2008/003693 en illustrent des exemples. Comme illustré en figure 1, cette technique repose sur l'utilisation d'un emporte-pièce formant ou comprenant un élément de coupe 10, destiné à découper un échantillon 11 de tissu de l'animal et à le collecter dans un logement. Pour ce faire, l'élément de coupe 10 présente une arête coupante de forme généralement circulaire, à contact continu ou en dents de scie.

L'emporte-pièce 10, fixé à une première mâchoire d'un outil de prélèvement comme une pince par exemple, vient découper la peau de l'animal, et s'insérer au moins partiellement dans le microtube 12, fixé à une deuxième mâchoire de l'outil, lors de l'actionnement de l'outil. L'emporte-pièce 10 présente classiquement un diamètre légèrement inférieur à celui du microtube 12, de façon à servir de bouchon au microtube. Le logement recevant l'échantillon 11 est donc ouvert vers l'intérieur du microtube, mais fermé vers l'extérieur du microtube, de façon à éviter une contamination de l'échantillon.

Grâce à ces techniques de prélèvement, l'échantillon 11 est directement inséré dans le microtube 12, limitant ainsi le risque de contamination de l'échantillon.

Malheureusement, un inconvénient de cette technique est que des poils de l'animal restent souvent coincés entre les parois du microtube et l'emporte-pièce servant de bouchon, engendrant un problème d'étanchéité du réceptacle. La conservation de l'échantillon n'est donc pas assurée.

De plus, une fois l'emporte-pièce inséré dans le microtube, il n'est plus possible d'ajouter de produit dans le microtube, comme un agent conservateur ou un réactif, sans avoir à retirer ou découper l'emporte-pièce.

Encore un inconvénient de cette technique est que l'emporte-pièce doit être manipulé pour extraire l'échantillon de tissu collecté dans le logement, cette dernière opération pouvant se révéler malaisée et/ou complexe, et présenter un risque de coupure pour l'utilisateur.

Il existe donc un besoin pour une nouvelle technique de prélèvement de tissu d'un animal ne présentant pas l'ensemble de ces inconvénients de l'art antérieur.

### 3. Exposé de l'invention

L'invention propose une solution nouvelle qui ne présente pas l'ensemble de ces inconvénients de l'art antérieur, sous la forme d'un dispositif de prélèvement de tissu d'un animal comme défini dans la revendication 1. L'invention propose ainsi une nouvelle approche du prélèvement d'un échantillon de tissu sur un animal, particulièrement simple et rapide pour l'utilisateur, et ne nécessitant pas obligatoirement la pose simultanée d'une marque d'identification. Elle propose en effet d'utiliser deux éléments distincts, mobiles l'un par rapport à l'autre, dont un élément de coupe permettant de découper l'échantillon de tissu, et un élément poussoir permettant de pousser l'échantillon dans les moyens de stockage.

Les opérations de découpe et de stockage de tissus sont donc effectuées lors du prélèvement de l'échantillon.

L'utilisation d'éléments distincts pour ces deux opérations présente de nombreux avantages. Par exemple, le fait de découper les tissus puis de pousser l'échantillon dans les moyens de stockage permet d'assurer une bonne découpe de l'échantillon, et d'éviter que des poils restent coincés entre les parois et le bouchon des moyens de stockage. Ces deux éléments distincts permettent également d'obtenir un meilleur prélèvement. En effet, l'élément de coupe n'étant pas destiné à être inséré dans les moyens de stockage, il est possible d'augmenter la taille de l'élément de coupe, c'est-à-dire la longueur de son arête coupante, et donc d'augmenter la taille de l'échantillon prélevé.

Selon un mode de réalisation particulier, l'élément de coupe et l'élément poussoir présentent une forme de révolution et sont d'axes confondus, l'élément de coupe servant de guide à l'élément poussoir.

Par exemple, l'élément de coupe et l'élément poussoir présentent une forme cylindrique, le diamètre de l'élément poussoir étant légèrement inférieur au diamètre de l'élément de coupe. L'élément de coupe est un cylindre vide. De cette façon, l'élément poussoir peut se déplacer à l'intérieur de l'élément de coupe, selon la direction de l'axe de révolution, jusqu'à ce qu'une de ses extrémités dépasse de l'élément de coupe au niveau de son arête coupante.

L'élément de coupe peut notamment être solidarisé à un support présentant également une forme de révolution, de même axe que l'élément de coupe.

En particulier, l'élément de coupe, ou son support de même axe de révolution, et l'élément poussoir comprennent des moyens de guidage en coulissement complémentaires, permettant le coulissement de l'élément poussoir à l'intérieur de l'élément de coupe.

Selon un autre aspect, l'élément poussoir comprend un réservoir contenant au moins un agent conservateur. L'utilisation d'un tel agent permet la dessiccation de l'échantillon.

Selon une caractéristique particulière de l'invention, l'élément poussoir comprend une première extrémité présentant une surface d'appui rigide, destinée à être percutée par un élément formant pointeau d'un outil de prélèvement. Si l'élément poussoir est un cylindre, cette première extrémité constitue une base du cylindre, opposée à une deuxième extrémité constituant l'autre base du cylindre, destinée quant à elle à venir en contact avec l'échantillon pour le pousser.

La rigidité de la surface d'appui de cette première extrémité permet de mettre en mouvement l'élément poussoir lorsqu'il est percuté ou poussé par l'élément formant pointeau de l'outil de prélèvement. L'élément poussoir est alors guidé en translation suivant son axe de révolution, et glisse au travers de l'élément de coupe.

La deuxième extrémité de l'élément poussoir, destinée à venir en contact avec l'échantillon, peut avantageusement présenter une paroi perméable, c'est-à-dire non étanche.

La perméabilité de la paroi permet à un agent conservateur, prévu dans un réservoir de l'élément poussoir, d'agir sur l'échantillon en le desséchant, pour qu'il puisse se conserver.

De plus, la présence d'une paroi perméable au niveau de la deuxième extrémité permet d'éviter que l'agent conservateur ou dessiccant soit en contact direct avec l'échantillon. Il est en effet préférable d'éviter ce contact qui pourrait dénaturer l'échantillon ou engendrer des problèmes lors de l'analyse ultérieure de l'échantillon.

Par exemple, une telle paroi non étanche appartient au groupe comprenant :
- une grille ;
- une cloison percée d'au moins une ouverture ;
- une membrane.

Selon un autre aspect de l'invention, les moyens de prélèvement comprennent un élément de protection amovible recouvrant au moins partiellement l'élément de coupe.

Cet élément de protection recouvrant l'élément de coupe permet d'éviter à un utilisateur de se blesser lors de la manipulation des moyens de prélèvement. Il permet aussi de protéger l'arête de l'élément de coupe de l'environnement extérieur. L'élément de protection permet par ailleurs d'isoler de l'air ambiant un agent conservateur prévu dans l'élément poussoir, afin qu'il remplisse correctement ses fonctions après prélèvement de l'échantillon.

Selon un autre exemple de réalisation, ce sont les moyens de stockage qui sont utilisés comme élément de protection. Ainsi, les moyens de stockage remplissent une double fonction de protection de l'élément de coupe avant prélèvement, et de stockage de l'échantillon après prélèvement.

Selon un autre aspect de l'invention, les moyens de stockage comprennent au moins une ouverture, et l'élément poussoir est apte à être introduit dans les moyens de stockage lors du prélèvement de façon à obturer l'ouverture.

De cette façon, il est possible de prélever un échantillon sans risquer de le contaminer. En effet, l'élément poussoir et l'échantillon sont insérés directement dans les moyens de stockage, sans intervention de l'utilisateur pour retirer l'échantillon de l'élément de coupe ou insérer l'échantillon dans les moyens de stockage manuellement.

Selon l'invention, les moyens de stockage comprennent un tube d'échantillon et une tête de tube, la tête de tube comprenant des moyens de solidarisation à l'élément poussoir.

En particulier, la tête de tube comprend un capuchon percé d'une ouverture centrale et une collerette destinée à prendre appui sur le rebord du tube.

L'utilisation d'une tête de tube procure de nombreux avantages. Tout d'abord, elle procure un support sur lequel l'élément de coupe peut s'appuyer pour découper correctement les tissus de l'animal. Elle permet également la fermeture du tube, par exemple par emboîtement ou clippage de l'élément poussoir dans la tête de tube. De plus, la présence d'une telle tête de tube permet l'automatisation de l'ouverture des tubes par les laboratoires d'analyse, en décapsulant la tête de tube de façon que seul l'échantillon reste à l'intérieur du tube.

L'invention concerne aussi un ensemble destiné à l'identification d'un animal, comprenant :
- un dispositif de prélèvement de tissu tel que décrit ci-dessus ;
- au moins une marque d'identification ;
le dispositif de prélèvement et ladite au moins une marque d'identification portant chacun un identifiant permettant d'identifier ledit animal.

Par exemple, un tel ensemble comprend un dispositif de prélèvement tel que décrit ci-dessus, une marque d'identification visuelle (étiquette auriculaire par exemple) et une marque d'identification électronique. Ces trois éléments peuvent porter un même numéro d'identification de l'animal, ou des identifiants liés entre eux. Dans tous les cas, ces identifiants permettent de coder la même information, c'est-à-dire d'identifier le même animal.

Bien entendu, un tel ensemble destiné à l'identification d'un animal peut contenir uniquement un dispositif de prélèvement et une marque visuelle, ou bien un dispositif de prélèvement et une marque électronique, ou bien tout autre élément ou produit permettant d'identifier l'animal et/ou de réaliser un suivi génétique de l'animal.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un dispositif de prélèvement d'un échantillon de tissu selon l'art antérieur ;
- les figures 2A et 2B présentent des moyens de prélèvement selon un mode de réalisation de l'invention ;
- la figure 3 illustre un exemple d'élément de coupe solidarisé à un support ;
- les figures 4A et 4B illustrent un exemple d'élément poussoir ;
- la figure 5 présente des moyens de stockage selon l'invention ;
- la figure 6 illustre l'utilisation de la tête de tube pour découper l'échantillon de tissu selon un mode de réalisation de l'invention ;
- la figure 7 illustre les moyens de stockage, une fois que l'échantillon est prélevé ;
- les figures 8A à 8D présentent un exemple d'outil de prélèvement utilisant un dispositif de prélèvement selon un mode de réalisation de l'invention, à différents stades du prélèvement.

### 5. Description d'un mode de réalisation de l'invention

### 5.1 Principe général

Le principe général de l'invention repose sur l'utilisation d'un élément poussoir, en plus d'un élément de coupe, pour prélever un échantillon de tissu d'un animal. Ce prélèvement peut être mis en oeuvre indépendamment de la pose d'une marque d'identification, ou conjointement à la pose d'une marque d'identification.

L'invention propose ainsi un nouveau dispositif de prélèvement de tissu comprenant des moyens de prélèvement et des moyens de stockage de l'échantillon, dans lequel les moyens de prélèvement comprennent deux éléments distincts mobiles l'un par rapport à l'autre, dont un élément de coupe permettant de découper les tissus de l'animal et un élément poussoir permettant de pousser l'échantillon ainsi découpé dans les moyens de stockage.

On rappelle que l'analyse d'échantillons de tissu d'un animal permet notamment d'identifier l'animal ou de détecter des maladies chez cet animal, au vu d'un examen microscopique ou d'une extraction d'une séquence ADN de cellules de l'échantillon par exemple.

### 5.2 Dispositif de prélèvement

On décrit ci-après un mode de réalisation de l'invention, utilisé pour le prélèvement d'un échantillon d'oreille d'un animal par exemple.

### A) Moyens de prélèvement

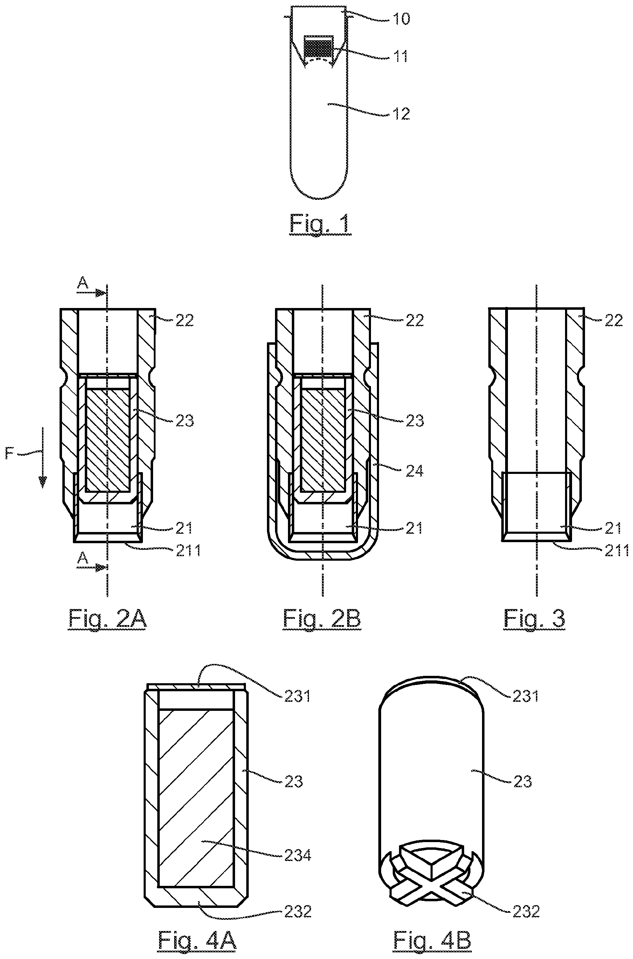

Les figures 2A et 2B présentent une vue en coupe des moyens de prélèvement selon ce mode de réalisation, qui comprennent d'une part un élément de coupe 21, et d'autre part un élément poussoir 23. Ces moyens de prélèvement peuvent être protégés au moins en partie par un élément de protection amovible 24, recouvrant au moins l'arête coupante de l'élément de coupe 21.

Cet élément de protection 24 permet d'éviter à un utilisateur de se blesser lors de la manipulation du dispositif de prélèvement et de protéger l'arête de l'élément de coupe de l'environnement extérieur. Il permet également de protéger de l'air ambiant un agent conservateur, éventuellement prévu dans un réservoir de l'élément poussoir 23.

Un agent antiseptique peut également être prévu dans l'élément de protection, par exemple sous forme de gel ou de mousse.

L'élément de protection 24 peut également être réalisé en matière biodégradable. Ainsi, une fois désolidarisé des moyens de prélèvement, l'utilisateur peut se débarrasser simplement de cet élément de protection en le jetant au sol par exemple, tout en préservant l'environnement.

Comme illustré en figure 3, l'élément de coupe 21 peut être solidarisé à un support 22. Ce support 22, qui peut être réalisé en matière plastique, est classiquement monté à l'extrémité d'un pointeau solidarisé à un des mors (ou mâchoire) d'une pince de prélèvement, de façon amovible. Il se présente sous la forme d'une surface de révolution, de même axe que l'élément de coupe 21 et l'élément poussoir 23. Selon une variante, l'élément de coupe 21 et le support 22 sont formés d'un seul tenant, par exemple en plastique ou en métal. On considère alors que l'élément de coupe 21 et le support 22 forment une seule pièce, qui est « monobloc ».

L'élément de coupe 21, qui peut être métallique, présente une arête coupante 211, à contact continu, crénelée, ou en dents de scie. Lors du prélèvement, l'élément de coupe découpe la peau de l'animal le long d'une ligne correspondant à l'arête coupante 211.

On considère selon cet exemple de réalisation que l'élément de coupe 21 présente une forme de révolution cylindrique. L'arête coupante 211 présente alors une forme circulaire. D'autres formes plus complexes peuvent également être envisagées.

Le cylindre formant élément de coupe 21 est ouvert à ses deux extrémités, afin de laisser passer l'élément poussoir 23, de sorte que ce dernier puisse pousser l'échantillon hors de l'élément de coupe 21 et l'accompagner dans les moyens de stockage, selon la direction illustrée par la flèche F.

Les figures 4A (vue en coupe) et 4B illustrent plus précisément l'élément poussoir 23, mobile en translation suivant l'axe de révolution A-A à l'intérieur de l'élément de coupe 21, selon la direction illustrée par la flèche F.

Selon l'exemple de réalisation illustré, l'élément poussoir 23 présente également une forme de révolution cylindrique. Toutefois, le diamètre de l'élément poussoir 23 doit être inférieur à celui de l'élément de coupe 21 pour que l'élément poussoir 23 puisse glisser à l'intérieur du cylindre formé par l'élément de coupe 21.

Le cylindre formant élément poussoir 23 est fermé au moins partiellement à ses deux extrémités ou bases.

Ainsi, une première extrémité 231 de l'élément poussoir 23 présente une surface d'appui rigide, sur laquelle on vient exercer une force pour mettre en mouvement l'élément poussoir 23 à l'intérieur de l'élément de coupe 21. Par exemple, cette force est exercée au moyen d'un élément formant pointeau d'une pince de prélèvement.

Une deuxième extrémité 232 de l'élément poussoir 23, destinée à venir en contact avec l'échantillon, présente selon le mode de réalisation décrit une paroi perméable, c'est-à-dire non étanche.

Cette paroi remplit plusieurs rôles. Tout d'abord, elle permet d'extraire l'échantillon en le poussant dans les moyens de stockage, après découpage par l'élément de coupe. De cette façon, l'échantillon est complètement détaché de l'animal et ne reste pas relié à l'animal par un filament ou des poils. Ceci permet d'augmenter l'efficacité du prélèvement, en collectant de manière quasi-certaine un échantillon lors du prélèvement.

De plus, un agent conservateur peut être prévu dans un réservoir 234 de l'élément poussoir 23. La perméabilité de la paroi permet alors à l'agent conservateur d'agir sur l'échantillon, tout en évitant que cet agent entre en contact direct avec l'échantillon.

Un agent dessiccant permet notamment d'améliorer la conservation de l'échantillon, en absorbant l'eau contenue dans l'échantillon. Il s'agit par exemple de silicagel (marque déposée) ou plus généralement d'un tamis moléculaire. Différents types de produit à base de silice, d'argile, ou autre, se présentant sous la forme de billes, poudre, gel, solide, liquide, etc, éventuellement imprégnés dans une mousse, peuvent donc être utilisés.

Comme illustré en figure 4B, la paroi située à la deuxième extrémité 232 de l'élément poussoir prend par exemple la forme d'une croix. D'autres types de paroi peuvent être envisagés, comme une membrane, une grille ou une cloison, qui peut être dure, souple, élastique, en tissu, percée d'une ou plusieurs croix, d'un ou plusieurs trous, etc. Il suffit que la paroi puisse être utilisée pour pousser l'échantillon hors de l'élément de coupe 21, et permette à un agent conservateur prévu dans le réservoir 234 d'agir sur l'échantillon, si un tel agent est prévu.

Afin de guider l'élément poussoir 23 dans l'élément de coupe 21, l'élément de coupe 21 et/ou son support 22 d'une part, et l'élément poussoir 23 d'autre part, comprennent des moyens de guidage en coulissement complémentaires.

Par exemple, l'élément poussoir 23 comprend une ou plusieurs rainures de guidage, parallèles à l'axe de révolution de l'élément de coupe 21 et de l'élément poussoir 23. Une ou plusieurs languettes de l'élément de coupe 21 et/ou de son support 22, également parallèles à l'axe de révolution, peuvent s'insérer dans ces rainures pour guider en coulissement l'élément poussoir 23. Ces languettes sont localisées sur la surface interne de la surface de révolution formant le support 22, et/ou sur la surface interne du cylindre creux formant l'élément de coupe 21. De manière avantageuse, ces languettes ne s'étendent pas jusqu'à l'arête tranchante de l'élément de coupe 21, afin de ne pas gêner la découpe de l'échantillon.

On constate ainsi que l'élément poussoir 23, susceptible de traverser l'oreille de l'animal, est protégé par le support 22 de l'élément de coupe 21. De cette façon, l'utilisateur n'a pas à manipuler cet élément poussoir 23, et ne risque donc pas de le contaminer, ou de contaminer l'échantillon. Il est également possible d'ajouter au support 22 des moyens permettant de maintenir l'élément poussoir 23 à l'intérieur du support 22, comme une bague ou un capuchon percé d'une ouverture centrale.

### B) Moyens de stockage

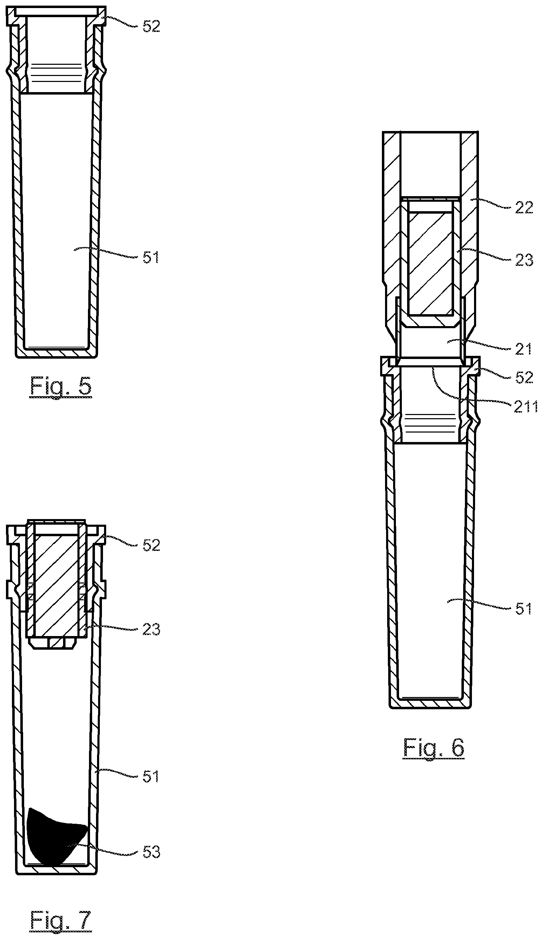

La figure 5 présente une vue en coupe des moyens de stockage, qui comprennent d'une part un tube d'échantillon 51 comprenant au moins une ouverture, et d'autre part une tête de tube 52.

On considère par exemple que la forme du tube d'échantillon est compatible avec un support de tubes d'échantillon de type « rack », comprenant par exemple 24, 48 ou 96 positions.

Une telle tête de tube 52 est solidarisée à l'entrée du tube d'échantillon, par exemple par clippage ou emboîtement. Elle peut être réalisée en matière flexible, notamment en caoutchouc, pour faciliter son insertion dans le col du tube.

Plus précisément, la tête de tube 52 se présente sous la forme d'un capuchon percé d'une ouverture centrale, de diamètre suffisant pour permettre l'insertion d'au moins une portion de l'élément poussoir 23. L'utilisation d'une matière flexible pour ce capuchon permet aussi de faciliter l'introduction de l'élément poussoir 23 dans le tube 51. L'élément poussoir 23 ferme alors de façon étanche ou quasi-étanche le tube 51.

La tête de tube 52 présente également une collerette, prenant appui sur le rebord du tube d'échantillon 51. L'utilisation d'une telle collerette permet notamment de faciliter la pose et l'enlèvement du capuchon. Une fois l'échantillon prélevé et l'élément poussoir 23 au moins partiellement inséré dans l'ouverture centrale de la tête de tube 51, il est en effet possible de retirer d'un seul bloc la tête de tube 52 et l'élément poussoir 23 pour analyser l'échantillon, par préhension de la collerette. Cette étape d'ouverture du tube d'échantillon 51, permettant de décapsuler la tête de tube de façon à ne laisser que l'échantillon de tissu dans le tube 51, peut ainsi être automatisée.

Comme illustré en figure 6, la collerette définit également une surface de butée (ou billot) sur laquelle l'arête coupante de l'élément de coupe 21 peut prendre appui lors du prélèvement, afin de découper plus facilement l'échantillon de tissu. Cette technique assure également une bonne découpe des poils de l'animal. De cette façon, les poils ne gênent pas la fermeture du tube, ce qui permet d'assurer une meilleure étanchéité du tube par rapport aux techniques de l'art antérieur.

Comme illustré en figure 7, l'élément poussoir 23 vient ensuite pousser l'échantillon 53 ainsi découpé dans le tube 51, et continue son mouvement en s'insérant dans la tête de tube 52. L'élément poussoir 23, solidarisé à la tête de tube 52 par emboîtement à force par exemple, obture ainsi hermétiquement ou quasi-hermétiquement le tube 51.

Selon un autre mode de réalisation, le tube d'échantillon 52 peut être utilisé comme élément de protection 24 selon la figure 2B.

### 5.3 Outil de prélèvement

On décrit ci-après un exemple d'outil de prélèvement pouvant être utilisé pour prélever un échantillon de tissu utilisant le dispositif de prélèvement décrit précédemment.

Un tel outil se présente généralement sous la forme d'une pince comprenant deux branches ou poignées quelconques, dont au moins une est articulée. Ces branches agissent sur deux mors ou mâchoires. Les moyens de prélèvement sont solidarisés à un élément formant pointeau de l'un des mors et les moyens de stockage sont solidarisés à l'autre mors.

La branche mobile, actionnable manuellement par exemple, agit sur des moyens d'entraînement de l'élément formant pointeau, de façon à guider les moyens de prélèvement selon un mouvement de translation, pour qu'ils pénètrent la chair de l'animal et forcent l'échantillon prélevé dans les moyens de stockage. La pince peut également être actionnée au moyen d'une énergie électrique, pneumatique, ou autre. Les moyens de prélèvement et de stockage sont donc configurés pour coopérer avec un tel outil. Plus précisément, l'élément de coupe et l'élément poussoir sont configurés pour être mis en mouvement l'un par rapport à l'autre en actionnant la pince.

L'exemple illustré propose un mécanisme à double pointeau, dans lequel un premier pointeau transmet un mouvement de translation à l'élément de coupe ou son support qui perfore l'oreille, puis un deuxième pointeau transmet un mouvement de translation parallèle à l'élément poussoir de manière à pousser l'échantillon de tissu, découpé mais toujours situé à l'intérieur de l'élément de coupe, et le placer dans le tube d'échantillon. La trajectoire de l'élément de coupe et de l'élément poussoir au travers de l'oreille est donc rectiligne. Ces deux mouvements sont commandés par une seule action de l'utilisateur sur la pince.

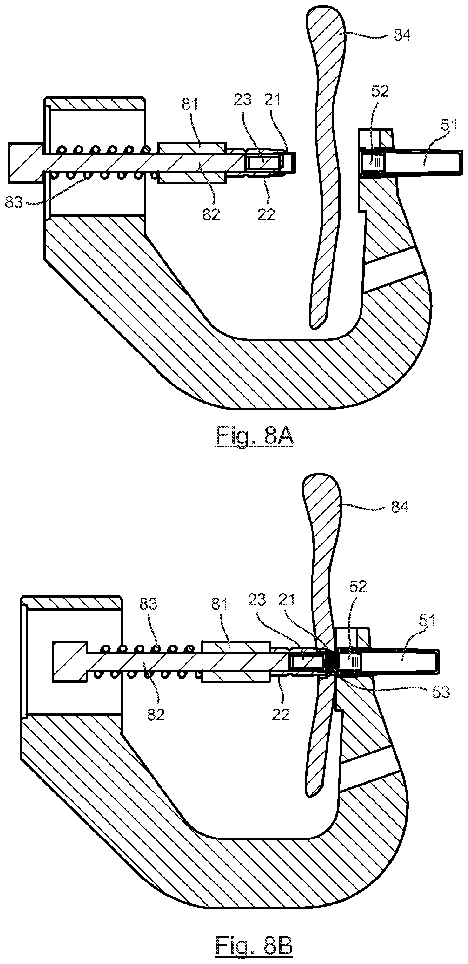

Les figures 8A à 8D illustrent plus précisément les mâchoires d'une telle pince, à différents stades du prélèvement.

A l'état initial, illustré en figure 8A, les moyens de prélèvement selon ce mode de réalisation de l'invention, comprenant un élément de coupe 21 solidarisé à un support 22 et un élément poussoir 23, sont montés sur un élément formant pointeau d'un mors de la pince. Un tel élément formant pointeau comprend par exemple deux pointeaux, dits premier pointeau 81 et deuxième pointeau 82, et un ressort 83. Les deux pointeaux 81 et 82 coulissent l'un dans l'autre.

Les moyens de stockage, comprenant un tube 51 et une tête de tube 52 selon ce mode de réalisation, sont montés sur l'autre mors de la pince, par exemple sur un support de tube.

De cette façon, aucun élément de la pince n'est directement en contact avec l'échantillon prélevé.

Si un élément de protection 24 protège l'élément de coupe 21 des moyens de prélèvement, il est nécessaire de le retirer avant l'opération de prélèvement.

L'utilisateur peut alors positionner les mors de la pince de part et d'autre de la zone de prélèvement sur l'animal, par exemple au niveau d'une oreille 84 de l'animal.

Comme illustré en figure 8B, l'utilisateur peut alors actionner la pince, agissant sur des moyens d'entraînement de l'élément formant pointeau, de façon à guider les moyens de prélèvement selon un mouvement de translation. L'élément de coupe 21 passe alors au travers de l'oreille 84 de l'animal, entraîné par le premier pointeau 81, jusqu'à ce que son arête tranchante prenne appui sur la collerette de la tête de tube 52, définissant une surface de butée ou billot. L'élément de coupe 21 permet ainsi de découper un échantillon 53 de tissu d'oreille de l'animal, qui se trouve alors à l'intérieur du cylindre creux définit par l'élément de coupe 21. En d'autres termes, l'élément de coupe 21 se comporte comme un emporte-pièce.

Lorsque l'arête tranchante de l'élément de coupe 21 entre en butée avec la collerette de la tête de tube, la course de l'élément de coupe 21 est arrêtée. Le ressort 83, dont la longueur est calibrée, commence alors à se compresser. La compression de ce ressort 83 entraîne le deuxième pointeau 82, guidé en translation à l'intérieur du premier pointeau 81. L'élément poussoir 23 se trouve alors guidé en translation à l'intérieur de l'élément de coupe 21, entraîné par le deuxième pointeau 82. Lorsque l'élément poussoir 23 arrive au contact de l'échantillon 53 préalablement découpé par l'élément de coupe 21, il continue sa course et pousse l'échantillon 53 dans le tube 51. En d'autres termes, l'élément poussoir 23 permet d'extraire l'échantillon de tissu découpé par l'élément de coupe 21.

Le mécanisme transmettant les mouvements aux pointeaux peut donc être vu comme un système de dévêtissage, dont le dévêtisseur supporte les moyens de prélèvement. Un tel système permet au premier pointeau 81 d'exercer une pression sur un élément périphérique des moyens de prélèvement, et au deuxième pointeau d'exercer une pression sur un élément central des moyens de prélèvement. L'élément périphérique des moyens de prélèvement correspond par exemple à la couronne formée par l'extrémité du support 22 ou de l'élément de coupe 21, opposée à l'arête coupante de l'élément de coupe 21. L'élément central des moyens de prélèvement correspond par exemple à la surface d'appui 231 de l'élément poussoir 23.

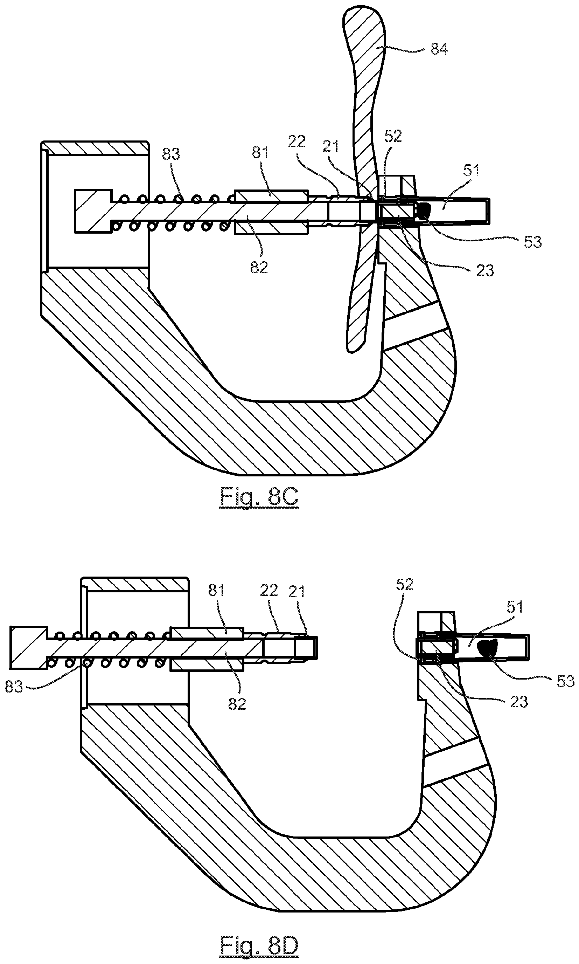

Comme illustré en figure 8C, l'élément poussoir 23 termine sa course en s'emboîtant dans la tête du tube 52, et obture ainsi hermétiquement ou quasi-hermétiquement le tube 51. L'élément poussoir 23 assure ainsi une fonction de bouchon des moyens de stockage.

De plus, du fait de la présence d'un agent conservateur dans l'élément poussoir 23, l'échantillon 53 localisé dans le tube 51 peut être desséché et conservé, pour une durée allant de quelques jours à plusieurs années.

Une fois les moyens de stockage fermés par l'élément poussoir 23 se comportant comme un bouchon, l'utilisateur peut relâcher l'action exercée sur les branches de la pince.

Comme illustré en figure 8D, le tube d'échantillon 51 comprenant l'échantillon 53, fermé par l'élément poussoir 23, reste monté sur le support de tube d'un des mors de la pince.

Le premier pointeau 81, sur lequel sont montés l'élément de coupe 21 et son support 22, revient à sa position initiale sur l'autre mors de la pince. En effet, selon ce mode de réalisation, l'élément formant pointeau comprend des moyens de maintien de l'élément de coupe 21, permettant de ramener l'élément de coupe dans sa position initiale tandis que l'élément poussoir 23 reste solidarisé à la tête de tube 52.

L'utilisateur peut alors retirer l'élément de coupe 21 et son support 22 de la pince, par exemple en actionnant un mécanisme d'éjection, permettant d'éviter à l'utilisateur de toucher l'élément de coupe 21 souillé et risquer de se couper. Cette éjection peut également être mise en oeuvre automatiquement, lors du retour en position initiale lorsque l'utilisateur relâche l'action exercée sur les branches de la pince.

L'utilisateur peut également retirer le tube d'échantillon 51 et vérifier visuellement la présence d'un échantillon de tissu dans ce tube. Pour ce faire, au moins une partie du tube est transparente.

L'utilisateur peut alors réitérer ces étapes sur un autre animal, ou sur le même animal en l'absence d'échantillon dans le tube.

On note qu'il est préférable d'identifier le tube d'échantillon avec un numéro d'identification de l'animal, par exemple sous la forme d'un code ou d'une matrice lisible par ordinateur. Ceci permet notamment un traitement automatisé du prélèvement par lecture du code ou de la matrice lors de l'analyse de l'échantillon contenu dans le tube.

En particulier, il est possible de fournir à l'utilisateur un ensemble comprenant un dispositif de prélèvement et une ou plusieurs marques d'identification (par exemple visuelle et/ou électronique).

Chaque élément de cet ensemble porte un identifiant permettant d'identifier un même animal en codant la même information, éventuellement sous différentes formes (par exemple sous la forme d'un numéro d'identification, d'un code barre, ou d'un code matriciel). Ces identifiants sont donc liés entre eux.

Par exemple, les marques d'identification électronique et visuelle (étiquette auriculaire par exemple) portent un même numéro d'identification, et le dispositif de prélèvement porte un code barre ou un code matriciel représentatif de ce numéro d'identification.

De cette façon, il est aisé pour un utilisateur (un éleveur par exemple) de renseigner et/ou de consulter les bases de données référençant les animaux, à partir d'une simple lecture de l'identifiant présent sur le dispositif de prélèvement, ou sur une marque d'identification visuelle, ou encore porté par une marque d'identification électronique d'un même ensemble, puisque tous ces identifiants permettent d'identifier le même animal.

De plus, il est possible d'obtenir l'ensemble des identifiants associés à un même animal (numéro d'identification, code barre, code matriciel ou autre) à partir de la lecture d'un seul de ces identifiants (par exemple numéro d'identification) dans la base de données. Par exemple, il est possible d'accéder à l'ensemble des identifiants d'un animal en saisissant, sur le site Internet du fournisseur, l'un des identifiants de l'animal.

Il est également possible d'accéder aisément aux analyses génétiques réalisées sur un animal, en entrant un identifiant de l'animal dans les bases de données (comme son numéro d'identification), puisqu'à la fois l'animal et le dispositif de prélèvement de tissu (notamment les moyens de stockage) portent un identifiant permettant d'identifier le même animal.

D'autres outils de prélèvement peuvent également être utilisés, du moment qu'ils permettent un double mouvement de translation parallèles de l'élément de coupe et de l'élément poussoir, légèrement décalés dans le temps de façon que l'élément de coupe découpe les tissus de l'animal avant que l'élément poussoir pousse l'échantillon ainsi découpé. Ce décalage temporel peut être de l'ordre de la nano ou microseconde.

Comme décrit dans l'exemple illustré, le mécanisme transmettant les mouvements aux pointeaux peut être un système de dévêtissage. D'autres mécanismes peuvent également être envisagés, comme un système d'arbre à cames, comprenant une première came entraînant le premier pointeau 81 et une deuxième came entraînant le deuxième pointeau 82.

Selon un autre mode de réalisation, la technique présentée pourrait être couplée avec la mise en place simultanée d'une marque d'identification. Avantageusement, cette marque d'identification porte un identifiant lié à un identifiant du dispositif de prélèvement, des identifiants permettant d'identifier un même animal en codant la même information.

## Revendications

1. Dispositif de prélèvement de tissu d'un animal comprenant :
- des moyens de prélèvement présentant au moins un élément de coupe (21) destiné à découper un échantillon de tissu de l'animal, et
- des moyens de stockage dudit échantillon, dans lequel lesdits moyens de prélèvement comprennent également un élément poussoir (23) mobile par rapport audit élément de coupe (21), permettant de pousser ledit échantillon dans lesdits moyens de stockage après découpe de l'échantillon par ledit élément de coupe (21), et dans lequel lesdits moyens de stockage comprennent un tube d'échantillon (51) et une tête de tube (52), **caractérisé en ce que** ladite tête de tube (52) forme un support configuré pour servir de surface d'appui audit élément de coupe pour découper ledit échantillon, et comprend une ouverture permettant l'insertion d'au moins une portion dudit élément poussoir dans lesdits moyens de stockage.

2. Dispositif de prélèvement selon la revendication 1, **caractérisé en ce que** ledit élément de coupe (21) et ledit élément poussoir (23) présentent une forme de révolution et sont d'axes confondus, ledit élément de coupe (21) servant de guide audit élément poussoir (23).

3. Dispositif de prélèvement selon la revendication 2, **caractérisé en ce que** ledit élément de coupe (21), ou un support de même axe de révolution auquel ledit élément de coupe (21) est solidarisé, et ledit élément poussoir (23) comprennent des moyens de guidage en coulissement complémentaires, permettant le coulissement dudit élément poussoir (23) à l'intérieur dudit élément de coupe (21).

4. Dispositif de prélèvement selon l'une quelconque des revendications 1 à 3, **caractérisé en ce que** ledit élément poussoir (23) comprend un réservoir contenant au moins un agent conservateur.

5. Dispositif de prélèvement selon l'une quelconque des revendications 1 à 4, **caractérisé en ce qu'**une première extrémité dudit élément poussoir (23) présente une surface d'appui rigide, destinée à être percutée par un élément formant pointeau d'un outil de prélèvement.

6. Dispositif de prélèvement selon l'une quelconque des revendications 1 à 5, **caractérisé en ce qu'**une deuxième extrémité dudit élément poussoir (23), destinée à venir en contact avec ledit échantillon, présente une paroi perméable.

7. Dispositif de prélèvement selon la revendication 6, **caractérisé en ce que** ladite paroi appartient au groupe comprenant :
- une grille ;
- une cloison percée d'au moins une ouverture ;
- une membrane.

8. Dispositif de prélèvement selon l'une quelconque des revendications 1 à 7, **caractérisé en ce que** lesdits moyens de prélèvement comprennent un élément de protection amovible recouvrant au moins partiellement ledit élément de coupe (21).

9. Dispositif de prélèvement selon l'une quelconque des revendications 1 à 8, **caractérisé en ce que** ladite tête de tube (52) comprend des moyens de solidarisation audit élément poussoir (23) permettant d'obturer ladite ouverture.

10. Dispositif de prélèvement selon l'une quelconque des revendications 1 à 9, **caractérisé en ce que** ladite tête de tube (52) comprend un capuchon percé d'une ouverture centrale et une collerette, destinée à prendre appui sur le rebord dudit tube (51).

11. Ensemble destiné à l'identification d'un animal, **caractérisé en ce qu'**il comprend :
- un dispositif de prélèvement de tissu selon l'une quelconque des revendications 1 à 10;
- au moins une marque d'identification ;
ledit dispositif de prélèvement et ladite au moins une marque d'identification portant chacun un identifiant permettant d'identifier ledit animal.

## Patentansprüche

1. Vorrichtung zur Entnahme von Gewebe eines Tieres, die aufweist:
- Mittel zur Entnahme, die wenigstens ein Schneideelement (21) aufweisen, das dazu vorgesehen ist, eine Probe des Gewebes des Tiers herauszuschneiden, und
- Mittel zum Aufbewahren der Probe,
wobei die Mittel zur Entnahme weiter ein Drückelement (23) aufweisen, dass bewegbar bezüglich des Schneideelementes (21) ist und es ermöglicht, die Probe in die Mittel zum Aufbewahren nach dem Herausschneiden der Probe durch das Schneideelement (21) zu drücken, und wobei
die Mittel zum Aufbewahren ein Probenrohr (51) und einen Rohrkopf (52) aufweisen, **dadurch gekennzeichnet, dass** der Rohrkopf (52) eine Unterstützung bildet, die dazu eingerichtet ist, als Auflagefläche für das Schneideelement zum Herausschneiden der Probe zu dienen, und eine Öffnung aufweist, welche das Einfügen wenigstens eines Teils des Drückelementes in die Mittel zum Aufbewahren ermöglicht.

2. Vorrichtung zur Entnahme nach Anspruch 1, **dadurch gekennzeichnet, dass** das Schneideelement (21) und das Drückelement (23) eine Rotationsform aufweisen mit zusammenfallenden Achsen, wobei das Schneideelement (21) als Führung für das Drückelement (23) dient.

3. Vorrichtung zur Entnahme nach Anspruch 2, **dadurch gekennzeichnet, dass** das Schneideelement (21) oder ein Träger der gleichen Rotationsachse, mit welchem das Schneidelement (21) verbunden ist, und das Drückelement (23) zusammenwirkende Gleitführungsmittel aufweisen, welche das Gleiten des Drückelements (23) in dem Inneren des Schneideelements (21) ermöglichen.

4. Vorrichtung zur Entnahme nach einem der Ansprüche 1 bis 3, **dadurch gekennzeichnet, dass** das Drückelement (23) ein Reservoir aufweist, das wenigstens ein Konservierungsmittel enthält.

5. Vorrichtung zur Entnahme nach einem der Ansprüche 1 bis 4, **dadurch gekennzeichnet, dass** ein erstes Ende des Drückelementes (23) eine feste Auflagefläche aufweist, die dafür vorgesehen ist, durch ein eine Nadel bildendes Element eines Werkzeugs zur Entnahme angestoßen zu werden.

6. Vorrichtung zur Entnahme nach einem der Ansprüche 1 bis 5, **dadurch gekennzeichnet, dass** ein zweites Ende des Drückelements (23), das dafür vorgesehen ist, in Kontakt mit der Probe zu kommen, eine durchlässige Wand aufweist.

7. Vorrichtung zur Entnahme nach Anspruch 6, **dadurch gekennzeichnet, dass** die Wand zur Gruppe gehört, die aufweist:
- ein Gitter;
- eine Trennwand, die von wenigstens einer Öffnung durchbohrt ist;
- eine Membran.

8. Vorrichtung zur Entnahme nach einem der Ansprüche 1 bis 7, **dadurch gekennzeichnet, dass** die Mittel zur Entnahme ein entfernbares Schutzelement aufweisen, das wenigstens teilweise das Schneideelement (21) bedeckt.

9. Vorrichtung zur Entnahme nach einem der Ansprüche 1 bis 8, **dadurch gekennzeichnet, dass** der Rohrkopf (52) Mittel zum Verbinden mit dem Drückelement (23) aufweist, die ein Verschließen der Öffnung ermöglichen.

10. Vorrichtung zur Entnahme nach einem der Ansprüche 1 bis 9, **dadurch gekennzeichnet, dass** der Rohrkopf (52) eine von einer zentrierten Öffnung durchbohrte Verschlusskappe und ein Übergangsstück aufweist, das dafür vorgesehen ist, auf der Wand des Rohrs (51) zur Auflage zu kommen.

11. Einheit, die zur Identifikation eines Tiers vorgesehen ist, **dadurch gekennzeichnet, dass** sie aufweist:
- eine Vorrichtung zur Entnahme von Gewebe nach einem der Ansprüche 1 bis 10;
- wenigstens eine Identifikationsmarkierung;
wobei die Vorrichtung zur Entnahme und die wenigstens eine Identifikationsmarkierung jeweils einen Identifikator aufweisen, der das Identifizieren des Tiers ermöglicht.

## Claims

1. Device for collecting tissue from an animal comprising:
- collecting means having at least one cutting element (21) designed to cut out a sample of tissue from the animal, and
- storage means for storing said sample,
wherein said collecting means also include a push element (23) that is mobile relatively to the cutting element (21), enabling said sample to be pushed into said storage means after it has been cut out by said cutting element (21),
and wherein said storage means comprise a sample tube (51) and a tube top piece (52),
**characterized in that** said tube top piece (52) forms a support configured to serve as a bearing surface for the cutting element in order to cut the sample, and comprises an aperture enabling the insertion of at least one portion of the push element into the storage means.

2. Collecting device according to claim 1, **characterized in that** said cutting element (21) and said push element (23) have a shape generated by revolution and have coinciding axes, said cutting element (21) being used as a guide for said push element (23).

3. Collecting device according to claim 2, **characterized in that** said cutting element (21), or a support having a same axis of revolution to which said cutting element (21) is secured and said push element (23) comprise complementary slidingly guiding means enabling said push element (23) to slide within said cutting element (21).

4. Collecting device according to any one of the claims 1 to 3, **characterized in that** said push element (23) comprises a container containing at least one preservative.

5. Collecting device according to any one of the claims 1 to 4, **characterized in that** a first end of said push element has a rigid bearing surface designed to be struck by an pushrod-forming element of a collecting tool.

6. Collecting device according to any one of the claims 1 to 5, **characterized in that** a second end of said push element (23), designed to come into contact with said sample, has a permeable wall.

7. Collecting device according to claim 6, **characterized in that** said wall belongs to the group comprising:
- a screen;
- a partition wall perforated with at least one aperture;
- a membrane

8. Collecting device according to any one of the claims 1 to 7, **characterized in that** said collecting means include a removable protection element at least partially covering said cutting element (21).

9. Collecting device according to any one of the claims 1 to 8, **characterized in that** said tube top piece (52) comprises means for fixed joining to said push element (23) enabling to block said aperture.

10. Collecting device according to any one of the claims 1 to 9, **characterized in that** said tube top piece (52) comprises a hood perforated with a central aperture and a flange designed to take support on the rim of said tube (51).

11. Set designed for the identification of an animal **characterized in that** it comprises:
- a device to collect tissue according to any one of the claims 1 to 10;
- at least one identification tag;
said device to collect tissue and said at least one identification tag each bearing an identifier enabling said animal to be identified.
